# EUROPÄISCHE PATENTSCHRIFT

(11) **EP 2 118 242 B1**
(45) Veröffentlichungstag und Bekanntmachung des Hinweises auf die Patenterteilung: **02.05.2018**
(21) Anmeldenummer: 08700287.9
(22) Anmeldetag: 23.01.2008
(51) Int. Cl.: C10J 3/84, C10K 1/02, B01D 46/00

(54) **HOLZVERGASUNGSANLAGE UND VERFAHREN**
WOOD GASIFICATION SYSTEM AND PROCESS
INSTALLATION DE GAZÉIFICATION DU BOIS ET PROCÉDÉ

(30) Priorität: 24.01.2007 AT 1202007
(43) Veröffentlichungstag der Anmeldung: 18.11.2009
(73) Patentinhaber: Urbas Maschinenfabrik Gesellschaft M.B.H., 9100 Völkermarkt (AT)
(72) Erfinder: URBAS, Peter, A-9100 Völkermarkt (AT); EBENBERGER, Peter, A-9122 St. Kanzian (AT); FELSBERGER, Wolfgang, A-9342 Gurk (AT)
(74) Vertreter: Wirnsberger, Gernot
(86) Internationale Anmeldenummer: PCT/AT2008/000020
(87) Internationale Veröffentlichungsnummer: WO 2008/089503

(56) Entgegenhaltungen:
- EP-A- 1 870 444
- DE-A1-102004 053 494
- US-A- 5 582 800
- US-B1- 6 837 910
- US-B1- 6 863 868

## Beschreibung

Die Erfindung betrifft eine Holzvergasungsanlage aufweisend einen Vergaser und einen dem Vergaser nachgeordneten Filter zum Entfernen von Staubpartikeln aus einem vom Vergaser erzeugten Schwachgas sowie einen dem Filter nachgeordneten Kondensator zum Entfernen von Teerkomponenten aus dem Schwachgas, wobei der Filter aus einem zumindest bis 300 °C beständigen Material besteht und das Schwachgas ohne vorherige Grobstaubabscheidung dem Filter zuführbar ist.

Weiter betrifft die Erfindung ein Verfahren zum Reinigen eines Schwachgases.

Infolge knapper werdender Rohstoffe und Energieressourcen besteht ein erhebliches Interesse daran, anfallende Alt- und Resthölzer einer ökonomisch und ökologisch sinnvollen Nutzung zuzuführen. Hierfür bietet sich ein Vergasen der Hölzer an, um aus diesen Schwachgas zu gewinnen. Das erzeugte Schwachgas kann verbrannt oder, und dies ist bevorzugt, zum Betrieb von Verbrennungskraftmaschinen verwendet werden.

Ein Problem bei einer Herstellung von Schwachgas durch Vergasen von Holz besteht darin, dass das anfallende Schwachgas mit erheblichen Mengen Staub (im Bereich von 25 bis 20000 mg/Nm³) und kondensierbaren Teerverbindungen (im Bereich von 50 bis 3000 mg/Nm³) verunreinigt ist. Dies verhindert in der Regel eine direkte Nutzung des Schwachgases für Verbrennungskraftmaschinen, weil für diesen Anwendungsfall Grenzwerte für Staub- und Teermengen im Schwachgas strickt einzuhalten sind (Staub: < 10 mg/Nm³; Teer: < 50 mg/Nm³).

Um ein für einen direkten Betrieb von Verbrennungskraftmaschinen geeignetes Schwachgas zu erhalten, können einerseits vergaserseitige Maßnahmen vorgesehen werden, durch welche reineres Schwachgas produzierbar ist. Derartige Maßnahmen sind allerdings mit Aufwand verbunden und für sich alleine nicht ausreichend.

Man ist daher darauf angewiesen, das von einem Vergaser erzeugte Schwachgas nachträglich zu reinigen und zumindest soweit von Staub- und Teerkomponenten zu befreien, dass die vorgeschriebenen Grenzwerte unterschritten werden. Hierzu werden gemäß dem Stand der Technik auch kombinierte Abgasreinigungssysteme mit einem Zyklon zum Abscheiden von Grobstaub und einem nachgeschalteten Filter zum Abscheiden von Feinstaub eingesetzt. Bei derartigen Anlagen können Grobstaub- und Feinstaubanteile sowie Anteile an Teer aus dem Schwachgas entfernt werden. Obwohl hierbei grundsätzlich die geforderte Reinheit von Schwachgas erreichbar ist, konnten sich solche Anlagen in der Praxis nicht durchsetzen.

Aus dem Dokument US 6 837 910 B1 sind ein Verfahren und eine Vorrichtung zum Vergasen von flüssigen oder festen Brennstoffen bekannt geworden, wobei vorgesehen sein kann, dass zwischen einer Vergasungseinrichtung und einem Kühler ein Keramikfilter in Strömungsrichtung angeordnet ist.

Das Dokument DE 10 2004 053 494 A1 offenbart ein Verfahren und eine Vorrichtung zur Umwandlung von Energie unter Verwendung von Biomasse, wobei ein Synthesegase gefiltert wird, wonach das Synthesegas unter Abscheidung eines Kondensats abgekühlt wird.

Bei den bekannten Anlagen tritt insbesondere das Problem auf, dass sich auf der Oberfläche des Filters rasch ein Filterkuchen beachtlicher Dichte bildet, wodurch sich auch ein Gegendruck erhöht bzw. ein Durchströmungswiderstand des Filters der Vergasungsanlage nachteilig ansteigt. Zusätzlich können sich bereits am Filterkuchen bzw. dem Filter kondensierbare Teerkomponenten abscheiden, was nicht nur zusätzlich die Erhöhung des Gegendrucks fördert bzw. verstärkt, sondern auch zu einer bitumenartigen Schicht am Filter führen kann, die äußerst schwer entfernbar ist. Als Folge dieser nachteiligen Auswirkungen ist beim Betrieb der Anlage ein hoher Aufwand erforderlich, da der Filter einerseits oftmals bzw. in kurzen Intervallen gereinigt werden muss und andererseits die Reinigung selbst erschwert sein kann.

Ziel der Erfindung ist es, eine Holzvergasungsanlage der eingangs genannten Art anzugeben, bei welcher diese Probleme beseitigt sind.

Ein weiteres Ziel der Erfindung ist es, ein Verfahren der eingangs genannten Art anzugeben, welches einen geringeren Aufwand in seiner Durchführung erfordert.

Das Ziel der Erfindung wird dadurch erreicht, dass bei einer Holzvergasungsanlage der eingangs genannten Art Einrichtungen zum wiederholten Beschichten des Filters mit einem Filtrierhilfsstoff sowie zum Entfernen der Beschichtung und eines Filterkuchens vorgesehen sind und wobei die Einrichtung zum wiederholten Beschichten des Filters ein Vorratsbehältnis für den Filtrierhilfsstoff und ein Dosiergerät aufweist, wobei mittels des Dosiergerätes dem Schwachgas variabel Filtrierhilfsstoff beimengbar ist.

Die mit der Erfindung erzielten Vorteile sind insbesondere darin zu sehen, dass durch die vorgesehene direkte Zuführung des Schwachgases zum Filter an diesem sowohl Grobals auch Feinstaubpartikel abgeschieden werden. Dies bringt insofern Vorteile, als dass sich der Filterkuchen nunmehr durch Grob- und Feinstaubpartikel aufbaut. Wie die Erfinder erkannt haben, hat ein Filterkuchen aus Grob- und Feinstaubpartikeln eine niedrigere Dichte als ein Filterkuchen aus Feinstaubpartikeln alleine. Aus anderem Blickwinkel betrachtet ist ein Anstieg des Gegendrucks durch Bildung eines Filterkuchens am Filter verlangsamt, auch wenn gemäß der Erfindung Grob- und Feinstaubpartikel gemeinsam, somit größere Mengen pro Zeitintervall, am Filter abgeschieden werden. Die Erklärung hierfür ist vermutlich jene, dass Feinstaubpartikel alleine dichter packen und daher eher zu einem höheren Gegendruck führen.

Bei einer erfindungsgemäßen Anlage baut sich ein Gegendruck nur langsam auf und die Anlage kann über erhebliche Zeitspannen ohne Reinigung des Filters betrieben werden. Eine Reinigung des Filters wird nur in bestimmten Intervallen oder bei Erreichen eines bestimmten Druckabfalls über den Filterquerschnitt vorgenommen. Daneben sich lässt eine gegebenenfalls erforderliche Reinigung auf einfache Weise erreichen, da der Filter aus einem zumindest bis 300 °C beständigen Material besteht und das Schwachgas diesem daher mit hohen Temperaturen zugeführt werden kann, sodass ein Abscheiden bzw. Kondensieren von Teerkomponenten und eine Ausbildung von bitumenartigen, schwer entfernbaren Komponenten am Filter vermieden ist.

Bezüglich des Filters hat es sich besonders bewährt, wenn der Filter ein Oberflächenfilter aus einem keramischen Material ist. Das Schwachgas kann dann zum einen mit hohen Temperaturen, z. B. bis zu 500 °C, auf den Filter geleitet werden. Bei diesen hohen Temperaturen ist ein Kondensieren von Teerverbindungen weitgehend vermieden. Zum anderen lässt sich ein Filterkuchen von der Oberfläche des Oberflächenfilters einfacher entfernen als aus dem Inneren eines Tiefenfilters.

Der Filter umfasst dabei mit Vorzug mehrere hohle, radial durchströmbare und voneinander beabstandete Filterzylinder. Dies erlaubt es, auf relativ wenig Raum ein großes Filtervolumen bei niedrigem Gegendruck zur Verfügung zu stellen und eine effiziente Reinigung des Schwachgases von Staubpartikeln zu erreichen. Die einzelnen Filterzylinder können waagrecht angeordnet sein, sind jedoch vorzugsweise senkrecht positioniert, damit ein Filterkuchen beim Abreinigen der Filterzylinder unter Ausnutzung der Schwerkraft im Wesentlichen senkrecht abfällt und bodenseitig einem Sammelbecken zugeführt werden kann.

Alternativ zu Filterzylindern bzw. Filterkerzen können auch Fasermatten eingesetzt werden, die gegebenenfalls mit Stützkörpern verstärkt sind und bis zu 1100 °C temperaturstabil bzw. einsetzbar sind. Eine Stabilität des Filters bis zu solch hohen Temperaturen erlaubt es, denselben näher am Vergaser anzuordnen, wodurch die gesamte Anlage kleiner bzw. kompakter gebaut werden kann.

Im Rahmen der Erfindung sind weiter Einrichtungen zum wiederholten Beschichten des Filters mit einem Filtrierhilfsstoff sowie zum Entfernen der Beschichtung und eines Filterkuchens vorgesehen. Durch die vorgesehene Einrichtung zum Beschichten des Filters kann ein Filtrierhilfsstoff wie Ca(OH)₂ aufgebracht werden, der in Bezug auf Staubpartikel selektiv ist und einem mechanischen Schutz des Filters dient. Die Einrichtung zum Entfernen der Beschichtung und des Filterkuchens erlaubt es, den Filter bedarfsweise automatisiert abzureinigen.

Zum wiederholten Beschichten des Filters sind erfindungsgemäß ein Vorratsbehältnis für den Filtrierhilfsstoff und ein Dosiergerät vorgesehen, wobei mittels des Dosiergerätes dem Schwachgas variabel Filtrierhilfsstoff beimengbar ist. Dadurch kann das ohnedies bestehende Leitungssystem für das Schwachgas gleichzeitig zum Einbringen von Filtrierhilfsstoff ausgenutzt werden, wobei das Schwachgas den gegebenenfalls fein verteilten Filtrierhilfsstoff zum Filter mittransportiert, wo dieser dann abgeschieden wird.

Eine Einrichtung zum Entfernen der Beschichtung und des Filterkuchens ist zweckmäßigerweise so ausgestaltet, dass diese einen Druckgaskessel umfasst und der Filter entgegen einer Strömungsrichtung des Schwachgases impulsweise mit Gas aus dem Druckgaskessel beaufschlagbar ist. Durch eine Gasbeaufschlagung des Filters können der Filterkuchen und die darunterliegende Beschichtung von der Rückseite her angeblasen und damit zum Abfallen gebracht werden. Dabei erweist es sich als zweckmäßig, kurze Impulse, beispielsweise im Bereich von 10 bis 100 Millisekunden, vorzusehen, was beispielsweise durch ein automatisch schaltendes Ventil erreicht werden kann. Besonders günstig ist es in diesem Zusammenhang, wenn zusätzlich eine Luftzerlegungsanlage vorgesehen ist, wobei Stickstoff aus der Luftzerlegungsanlage dem Druckgaskessel zuführbar ist. In diesem Fall kann eine Gasbeaufschlagung ausschließlich mit Stickstoff erfolgen. Dies vermeidet eine Explosionsgefahr, welche bei Anteilen von Sauerstoff gegeben sein kann. Der von der Luftzerlegungsanlage produzierte Sauerstoff kann im Gemisch mit Luft dem Vergaser zugeführt werden, um eine möglichst vollständige Vergasung zu erreichen.

Zum Sammeln entfernter Beschichtung bzw. von Filtrierhilfsstoffen sowie abgeschiedenem Staub kann unterhalb des Filters ein Sammelbecken vorgesehen sein. Günstigerweise ist zusätzlich auch eine Leitung vorgesehen, über welche vom Filter entfernter Filtrierhilfsstoff in den Vergaser transportierbar bzw. rückführbar ist. Wird beispielsweise Calciumhydroxid Ca(OH)₂ als Filtrierhilfsstoff eingesetzt und nach einem Abreinigen des Filters in den Vergaser rückgeführt, so bindet es dort bei der Vergasung entstehendes CO₂. In der Folge weist das bei der Vergasung entstehende Schwachgas einen geringeren CO₂-Anteil auf, was zu einem höheren Brennwert des Schwachgases führt. Ein positiver Nebeneffekt dabei ist, dass das entstehende Calciumcarbonat mit der ausgebrannten Vergaserasche abgeführt werden kann, also keine gesonderte Entsorgung des Filtrierhilfsstoffes erforderlich ist.

Das weitere Ziel der Erfindung wird bei einem Verfahren der eingangs genannten Art erreicht, wenn die Reinigung des Schwachgases in einer erfindungsgemäßen Holzvergasungsanlage erfolgt, wobei ein von einem Vergaser erzeugtes Schwachgas von Grob- und Feinstaub sowie Teerkomponenten zumindest teilweise befreit wird, wobei das Schwachgas mit Grob- und Feinstaubanteilen und mit einer Temperatur von zumindest 300 °C einem Filter zugeführt wird, wobei der Filter wiederholt mit einem Filtrierhilfsstoff beschichtet und vom Filtrierhilfsstoff und einem Filterkuchen befreit wird, wobei der Filtrierhilfsstoff dem Schwachgas beigemengt und am Filter abgeschieden wird.

Die verfahrensmäßig erzielten Vorteile sind insbesondere darin zu sehen, dass das Schwachgas ohne vorherige Reinigung und mit hoher Temperatur zum Filter geführt wird. Dadurch kommt es am Filter einerseits zur Ausbildung eines Filterkuchens, welcher sich aus Grob- und Feinstaubanteilen zusammensetzt und daher eine relativ geringe Dichte und hohe Gasdurchlässigkeit aufweist. Ein durch die Filterkuchenbildung verursachter Gegendruckanstieg verläuft im Vergleich mit bekannten Verfahren daher langsamer. Andererseits ist bei den vorgesehenen Temperaturen ein Abscheiden bzw. Kondensieren von Teerkomponenten am Filter bzw. am Filterkuchen zumindest weitestgehend vermieden, was ebenfalls zu einem geringeren Gegendruck beiträgt. Aus diesen Gründen sind auch die Intervalle, in welchen ein Reinigen des Filters vorzusehen ist, verlängert und eine Durchführung des Verfahrens insgesamt erleichtert.

Zweckmäßigerweise wird so vorgegangen, dass eine Anströmfläche des Filters senkrecht positioniert wird, damit der Filterkuchen beim Reinigen des Filters im Wesentlichen senkrecht abfallen kann und in einem Sammelbecken aufgefangen werden kann.

Erfindungsgemäß ist zum mechanischen Schutz des Filters vorgesehen, dass der Filter wiederholt mit einem Filtrierhilfsstoff beschichtet und vom Filtrierhilfsstoff und einem Filterkuchen befreit wird. Ein Abreinigen des Filters bzw. Befreien von Filtrierhilfsstoffen erfolgt vorzugsweise durch impulsweise Beaufschlagung mit Stickstoff. Die einzelnen Impulse dauern zwischen 10 und 100 Millisekunden und bewirken ein vollständiges Lösen bzw. Abfallen der Beschichtung und des Filterkuchens. Hierfür ist, um eine Explosionsgefahr gering zu halten, Stickstoff vorgesehen, wenngleich auch Luft eingesetzt werden kann.

Der Filtrierhilfsstoff kann ein Kalkmehl, Calciumhydroxid oder ein anderes geeignetes Material sein, welches Staub bindet. Nach dem Abreinigen des Filters bzw. Entfernen wird der Filtrierhilfsstoff in den Vergaser rückgeführt, wo der Filtrierhilfsstoff Kohlendioxid bindet, wodurch es zu einer Reduktion des CO₂-Anteiles im Schwachgas kommt.
Wie sich gezeigt hat, ist es in Grenzen auch möglich, den abgereinigten Filtrierhilfsstoff zusammen mit dem Filterkuchen in das Vorratsbehältnis rückzuführen und so wiederholt zum Beschichten des Filters einzusetzen.

Weitere Merkmale, Vorteile und Wirkungen der Erfindung ergeben sich aus dem nachfolgend beschriebenen Ausführungsbeispiel und der anliegenden Figur, auf die in diesem Zusammenhang Bezug genommen wird.

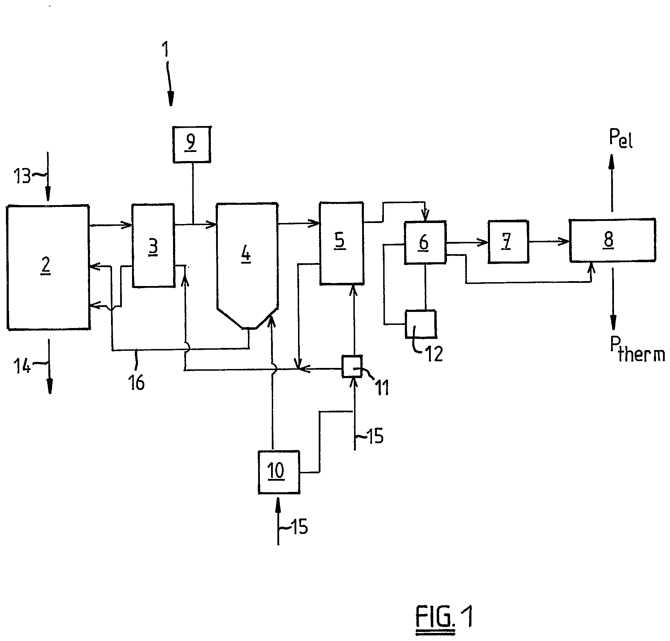

Die Figur zeigt eine blockschaltbildartige Darstellung einer Variante einer erfindungsgemäßen Holzvergasungsanlage 1, die wie folgt betrieben wird:
Einem Vergaser 2 der Holzvergasungsanlage 1 wird über eine Transportvorrichtung 13 Holz als Brenn- bzw. Vergasungsstoff zugeführt. Vergasungsrückstände werden über eine weitere Transportvorrichtung 14 vom Vergaser 2 abgenommen und zum Entsorgen abgeführt. Der schematisch dargestellte Vergaser 2 ist beispielsweise ein Festbett-, Flugstrom- oder Wirbelschichtvergaser, bevorzugt ein Gleichstrom-Festbettvergaser.

Das durch die Vergasung im Vergaser 2 entstehende Schwachgas mit Grobstaub- und Feinstaubanteilen sowie mit Anteilen kondensierbarer Teerverbindungen wird gegebenenfalls unter geringer Kühlung über einen Luftvorwärmer 3 geführt und ohne vorherige Reinigung mit einer Temperatur von 250 °C oder höher einem Filter 4 zugeleitet. Der Filter 4 umfasst bevorzugt eine Vielzahl einzelner, zueinander beabstandet angeordneter Filterzylinder, die vom Schwachgas außenseitig angeströmt werden und sowohl für eine Abscheidung von Grob- als auch Feinstaub sorgen. Die Filterzylinder sind mit Vorzug Oberflächenfilter und bestehen aus einem keramischen Material, welches den hohen Betriebstemperaturen ohne Weiteres standhält. Anstelle der Filterzylinder kann auch eine Filtermatte eingesetzt werden.

Durch die Filterzylinder gereinigtes Schwachgas wird über die Hohle der Filterzylinder abgenommen und anschließend in einem weiteren Luftvorwärmer 5 vorgekühlt, ehe es in einem Kondensator 6 auf eine Temperatur von etwa 10 °C bis 30 °C abgekühlt wird, um Teerkomponenten zu kondensieren und aus dem Schwachgas zu entfernen. Der Kondensator 6 kann optional, wie in der Figur dargestellt, mit einem Kältemittelreservoir 12 verbunden sein, um eine hohe Kühlleistung zu erzielen. Im Anschluss durchströmt das Schwachgas ein Saugzuggebläse 7, ehe es einem Blockheizkraftwerk (BHKW) 8 zugeleitet wird, das der Erzeugung elektrischer oder thermischer Energie aus dem Schwachgas dient.

Ist es erforderlich, den Filter 4 bzw. die Filterzylinder abzureinigen, wird dieser bzw. werden diese rückseitig, also entgegen einer Strömungsrichtung des Schwachgases, impulsweise mit Stickstoff angeblasen. Das impulsweise Anblasen führt zu einer Art Druckstoß- bzw. Rütteleffekt, der ein Abfallen des Filterkuchens vom Filter 4 bzw. der Filterkuchen von den einzelnen Filterzylindern bewirkt. Der erforderliche Stickstoff wird mittels einer Luftzerlegungsanlage 10 erzeugt.

Während und nach einem Abreinigen der Filterzylinder werden diese mit Ca(OH)₂ oder anderen geeigneten Filtrierhilfsstoffen beschichtet. Hierfür wird über ein Vorratsbehältnis 9 mit integrierter Dosiereinheit Ca(OH)₂ in die Schwachgasleitung eindosiert, und zwar in Strömungsrichtung des Schwachgases betrachtet vor dem Filter 4. Das zudosierte Ca(OH)₂ scheidet sich auf den keramischen Filterzylindern ab und dient deren mechanischen Schutz. Beim Abreinigen der Filterzylinder wird der Filtrierhilfsstoff ebenfalls entfernt und mit den Bestandteilen des Filterkuchens gesammelt. Beides, Filterkuchen und Filtrierhilfsstoff, wird nach dem Sammeln über eine Leitung 16 in den Vergaser geführt. Das Ca(OH)₂ bindet dort CO₂, mit dem Vorteil, dass das Schwachgas geringere CO₂-Konzentrationen und daher einen höheren Brennwert aufweist. Die Anteile des Filterkuchens werden über die Transportvorrichtung 14 zusammen mit Vergasungsrückständen abgeführt. Im gesamten Vergasungsprozess fällt also nur ein Abfallprodukt an.

Um eine Vergasung bestmöglich, d. h. mit geringen Rückständen an unvergastem Holz, zu betreiben, ist weiter vorgesehen, dass der durch die Luftzerlegungsanlage 10 erzeugte Sauerstoff in einem Mischer 11 mit Luft, welche über eine Luftzufuhrleitung 15 in den Mischer 11 eingespeist wird, gemischt und anschließend die so mit Sauerstoff angereicherte Luft über eine Leitung in den Vergaser eingebracht wird. Dabei wird die mit Sauerstoff angereicherte Luft über den Luftvorwärmer 3 geführt, um sie vorzuwärmen.

## Patentansprüche

1. Holzvergasungsanlage (1), aufweisend einen Vergaser (2) und einen dem Vergaser (2) nachgeordneten Filter (4) zum Entfernen von Staubpartikeln aus einem vom Vergaser (2) erzeugten Schwachgas sowie einen dem Filter (4) nachgeordneten Kondensator (6) zum Entfernen von Teerkomponenten aus dem Schwachgas, wobei der Filter (4) aus einem zumindest bis 300 °C beständigen Material besteht und das Schwachgas ohne vorherige Grobstaubabscheidung dem Filter (4) zuführbar ist, **dadurch gekennzeichnet, dass** Einrichtungen (9, 10) zum wiederholten Beschichten des Filters (4) mit einem Filtrierhilfsstoff sowie zum Entfernen der Beschichtung und eines Filterkuchens vorgesehen sind und wobei die Einrichtung (9) zum wiederholten Beschichten des Filters (4) ein Vorratsbehältnis für den Filtrierhilfsstoff und ein Dosiergerät aufweist, wobei mittels des Dosiergerätes dem Schwachgas variabel Filtrierhilfsstoff beimengbar ist.

2. Holzvergasungsanlage (1) nach Anspruch 1, **dadurch gekennzeichnet, dass** der Filter (4) ein Oberflächenfilter aus einem keramischen Material ist.

3. Holzvergasungsanlage (1) nach Anspruch 1 oder 2, **dadurch gekennzeichnet, dass** der Filter (4) mehrere hohle, radial durchströmbare und voneinander beabstandete Filterzylinder umfasst.

4. Holzvergasungsanlage (1) nach Anspruch 3, **dadurch gekennzeichnet, dass** die Filterzylinder senkrecht angeordnet sind.

5. Holzvergasungsanlage (1) nach Anspruch 3 oder 4, **dadurch gekennzeichnet, dass** die Einrichtung (10) zur Beschichtungsentfernung einen Druckgaskessel umfasst und der Filter entgegen einer Strömungsrichtung des Schwachgases impulsweise mit Gas aus dem Druckgaskessel beaufschlagbar ist.

6. Holzvergasungsanlage (1) nach Anspruch 5, **dadurch gekennzeichnet, dass** eine Luftzerlegungsanlage (11) vorgesehen ist, wobei Stickstoff aus der Luftzerlegungsanlage (11) dem Druckgaskessel zuführbar ist.

7. Holzvergasungsanlage (1) nach einem der Ansprüche 1 bis 6, **dadurch gekennzeichnet, dass** unterhalb des Filters (4) ein Sammelbecken vorgesehen ist.

8. Holzvergasungsanlage (1) nach einem der Ansprüche 1 bis 7, **dadurch gekennzeichnet, dass** eine Leitung (16) vorgesehen ist, über welche vom Filter (4) entfernter Filtrierhilfsstoff in den Vergaser (2) transportierbar ist.

9. Verfahren zum Reinigen eines Schwachgases in einer Holzvergasungsanlage (1) nach einem der Ansprüche 1 bis 8, wobei ein von einem Vergaser (2) erzeugtes Schwachgas von Grob- und Feinstaub sowie Teerkomponenten zumindest teilweise befreit wird, wobei das Schwachgas mit Grob- und Feinstaubanteilen und mit einer Temperatur von zumindest 300 °C einem Filter (4) zugeführt wird, wobei der Filter (4) wiederholt mit einem Filtrierhilfsstoff beschichtet und vom Filtrierhilfsstoff und einem Filterkuchen befreit wird, wobei der Filtrierhilfsstoff dem Schwachgas beigemengt und am Filter (4) abgeschieden wird.

10. Verfahren nach Anspruch 9, **dadurch gekennzeichnet, dass** eine Anströmfläche des Filters (4) senkrecht positioniert wird.

12. Verfahren nach Anspruch 11, **dadurch gekennzeichnet, dass** der Filter (4) durch impulsweise Beaufschlagung mit Stickstoff von Filtrierhilfsstoffen befreit wird.

13. Verfahren nach Anspruch 11 oder 12, **dadurch gekennzeichnet, dass** der Filtrierhilfsstoff ein Kalkmehl oder Calciumhydroxid ist.

14. Verfahren nach einem der Ansprüche 10 bis 13, **dadurch gekennzeichnet, dass** der Filtrierhilfsstoff nach Entfernen vom Filter (4) in den Vergaser (2) rückgeführt wird.

## Claims

1. A wood gasification system (1) having a gasifier (2) and a filter (4) downstream of the gasifier (2) for removing dust particles from a lean gas produced by the gasifier (2), and a condenser (6) downstream of the filter (4) for removing tar components from the lean gas, the filter (4) consisting of a material able to withstand at least up to 300°C, and the lean gas being feedable to the filter (4) without any prior coarse dust separation, **characterised in that** devices (9, 10) are provided for repeated coating of the filter (4) with an additional filtering substance and for removing the coating and a filter cake, and wherein the device (9) for repeated coating of the filter (4) has a storage container for the additional filtering substance and a metering unit, wherein additional filtering substance is added variably to the lean gas by means of the metering unit.

2. The wood gasification system (1) according to Claim 1, **characterised in that** the filter (4) is a surface filter consisting of a ceramic material.

3. The wood gasification system (1) according to Claim 1 or 2, **characterised in that** the filter (4) comprises multiple hollow filter cylinders which are spaced from one another and through which flow can pass radially.

4. The wood gasification system (1) according to Claim 3, **characterised in that** the filter cylinders are arranged vertically.

5. The wood gasification system (1) according to Claim 3 or 4, **characterised in that** the device (10) for removing the coating comprises a compressed gas vessel, and gas from the compressed gas vessel is applied in a pulsed manner to the filter counter to a flow direction of the lean gas.

6. The wood gasification system (1) according to Claim 5, **characterised in that** an air separation system (11) is provided, wherein nitrogen from the air separation system (11) can be fed to the compressed gas vessel.

7. The wood gasification system (1) according to any one of Claims 1 to 6, **characterised in that** a collection tank is provided under the filter (4).

8. The wood gasification system (1) according to any one of Claims 1 to 7, **characterised in that** a pipeline (16) is provided via which additional filtering substance removed from the filter (4) can be transported into the gasifier (2).

9. A method for cleaning a lean gas in a wood gasification system (1) according to any one of Claims 1 to 8, wherein a lean gas produced by a gasifier (2) is at least partially freed of coarse and fine dust and tar components, wherein the lean gas containing coarse and fine dust and at a temperature of at least 300°C is fed to a filter (4), wherein the filter (4) is repeatedly coated with an additional filtering substance and freed of additional filtering substance and a filter cake, wherein the additional filtering substance is added to the lean gas and separated out at the filter (4).

10. The method according to Claim 9, **characterised in that** an inflow face of the filter (4) is positioned vertically.

12. The method according to Claim 11, **characterised in that** the filter (4) is freed of additional filtering substances by pulsed application of nitrogen.

13. The method according to Claim 11 or 12, **characterised in that** the additional filtering substance is a lime powder or calcium hydroxide.

14. The method according to any one of Claims 10 to 13, **characterised in that** the additional filtering substance is recirculated to the gasifier (2) after removal from the filter (4).

## Revendications

1. Installation de gazéification du bois (1), comportant un gazogène (2) et un filtre (4) placé en aval du gazogène (2) pour éliminer des particules de poussière d'un gaz pauvre généré par le gazogène (2), ainsi qu'un condensateur (6) placé en aval du filtre (4) pour éliminer des composants goudronnés du gaz pauvre, le filtre (4) étant composé de matière résistant au moins à 300 °C et le gaz pauvre pouvant être amené au filtre (4) sans séparation préalable des poussières grossières, **caractérisée en ce que** des équipements (9, 10) sont prévus pour le revêtement réitéré du filtre (4) avec un adjuvant de filtration, ainsi que pour le retrait du revêtement et d'un gâteau de filtration et pour le revêtement réitéré du filtre (4), l'équipement (9) comportant un contenant de réserve pour l'adjuvant de filtration et un appareil doseur, au moyen de l'appareil doseur, de l'adjuvant de filtration pouvant être mélangé de manière variable au gaz pauvre.

2. Installation de gazéification du bois (1) selon la revendication 1, **caractérisée en ce que** le filtre (4) est un filtre superficiel en une matière céramique.

3. Installation de gazéification du bois (1) selon la revendication 1 ou 2, **caractérisée en ce que** le filtre (4) comporte plusieurs cylindres filtrants creux, pouvant être traversés en direction radiale et écartés les uns des autres.

4. Installation de gazéification du bois (1) selon la revendication 3, **caractérisée en ce que** les cylindres filtrants sont placés à la verticale.

5. Installation de gazéification du bois (1) selon la revendication 3 ou 4, **caractérisée en ce que**, pour le retrait du revêtement, l'équipement (10) comprend une chaudière à gaz sous pression et le filtre peut être soumis par impulsions, à l'encontre du sens de circulation du gaz pauvre, à du gaz provenant de la chaudière à gaz sous pression.

6. Installation de gazéification du bois (1) selon la revendication 5, **caractérisée en ce qu'**il est prévu une installation de séparation de l'air (11), de l'azote provenant de l'installation de séparation de l'air (11) pouvant être amené à la chaudière à gaz sous pression.

7. Installation de gazéification du bois (1) selon l'une quelconque des revendications 1 à 6, **caractérisée en ce que** sous le filtre (4) est prévu un bassin collecteur.

8. Installation de gazéification du bois (1) selon l'une quelconque des revendications 1 à 7, **caractérisée en ce qu'**il est prévu un conduit (16) par l'intermédiaire duquel de l'adjuvant de filtration éliminé par le filtre (4) peut être transporté dans le gazogène (2).

9. Procédé destiné à l'épuration d'un gaz pauvre dans une installation de gazéification du bois (1) selon l'une quelconque des revendications 1 à 8, lors duquel on libère au moins en partie un gaz pauvre généré par un gazogène (2) des poussières grossières et des poussières fines, ainsi que des composants goudronnés, sachant qu'on alimente la gaz pauvre avec des particules de poussières grossières et de poussières fine, et à une température d'au moins 300 °C dans un filtre (4), le filtre (4) étant revêtu de manière réitérée d'un adjuvant de filtration et libéré de l'adjuvant de filtration et d'un gâteau de filtration, l'adjuvant de filtration étant mélangé au gaz pauvre et séparé sur le filtre (4).

10. Procédé selon la revendication 9, **caractérisé en ce qu'**on positionne à la verticale une surface d'affluence du filtre (4).

12. Procédé selon la revendication 11, **caractérisé en ce que** par soumission par impulsions à de l'azote, on libère le filtre (4) des adjuvants de filtration.

13. Procédé selon la revendication 11 ou 12, **caractérisé en ce que** l'adjuvant de filtration une farine de calcaire ou un hydroxyde de calcium.

14. Procédé selon l'une quelconque des revendications 10 à 13, **caractérisé en ce qu'**après le retrait du filtre (4), on ramène l'adjuvant de filtration dans le gazogène (2).
